# EUROPEAN PATENT APPLICATION

(11) **EP 4 610 467 A1**
(43) Date of publication of application: **03.09.2025**
(21) Application number: 25160188.6
(22) Date of filing: 26.02.2025
(51) Int. Cl.: E06B 9/64, A01G 9/24, A47H 1/122, F16G 11/06

(54) **GRIP MECHANISM**

(30) Priority: 29.02.2024 GB 202402927
(71) Applicant: Galebreaker Group Ltd, Ledbury HR8 2SS (GB)
(72) Inventor: Gearon, Scott, Ledbury, HR8 2SS (GB)
(74) Representative: Strachan, Victoria Jane

(57) **Abstract**

A grip mechanism 32 for clamping first and second cables together, said grip mechanism comprising an elongate body 34 having a longitudinal groove 36 extending therethrough, the grip mechanism 32 further comprising:
- a pair of first fixing means 44 located in a wall of said body 34, and extending therethrough to said longitudinal groove 36, each of said first fixing means 44 being located in spaced apart relation along the length of said body 34; and
- a second fixing means 46 located in a wall of said body 34, substantially diametrically opposite said wall in which said first fixing means 44 are provided, and extending therethrough to said longitudinal groove 36, said second fixing means 46 being located along the length of said body 34, between the locations of said pair of first fixing means 44;
the grip mechanism 32 further comprising a slit or channel 38 extending along and through the wall of said body 34, said slit or channel 38 being communicably coupled to said longitudinal groove 36.

## Description

### Field of the Invention

This invention relates generally to a grip mechanism and, more particularly, but by no means exclusively, to a wire rope / cable grip mechanism for adjustably and removably coupling together a wire rope and a cable in, for example, a movable closure or curtain in an industrial, agricultural or other heavy duty application.

### Background of the Invention

An electrically motorized screen (or series of screens) of supple material is known, that can be selectively raised and lowered, and is intended for use as a movable closure for openings in buildings and like enclosures, particularly (but by no means exclusively) in the agricultural sector.

Research has shown that all livestock need a certain amount of fresh air (called air renewal) in a building in order to maintain the livestock in a healthy condition. Indeed, a livestock building based upon the principles of natural ventilation (i.e. incoming fresh air, outgoing stale air) will greatly decrease the incidence of respiratory diseases, environmental mastitis in the case of dairy cattle, influenza, and also reduce condensation within the building.

Whilst it is important to ensure there is sufficient incoming fresh air, it is also vital to avoid draughts which, in a livestock building, can cause influenza, coughing and mastitis in dairy cattle, thereby increasing veterinary costs and potentially causing a reduction in income.

Research has demonstrated that in order to attain optimal conditions in a building, naturally ventilated windbreak material should cover open areas equally disposed on both sides of the building.

Accordingly, electrically motorized screen systems have been proposed to cover the open sides of, for example, an agricultural/livestock building, usually comprising a side-by-side series of screens formed of a supple material, that can be selectively raised or lowered to permit controlled natural ventilation of the building.

One such electrically motorized screen system is described in European Patent No. 0665360, wherein at least one screen of supple material Is affixed at its upper end to a fixed structure of, for example, a building, and the lower end is mounted on a rolling tube, driven by a drive unit, and the electrically driven rolling tube, that allows the screen to be raised and lowered as required, is supplemented by a guide pulley having coupled thereto a tensioned lifting cable configured to lift or lower the rolling tube as the screen is lifted or lowered.

In more recent innovation in this sector, movable curtains have been developed that regulate ventilation from the side of livestock buildings, and used to optimise the internal environment for housed livestock. In this case, the curtains may open from the top. Each curtain may be mounted on a pole that extends along its to edge (and, if several curtains are to be hung in side-by-side relation, the ends of the poles may be configured to be coupled to a respective end of another pole in the series). A drive motor is mounted at the lower end of the arrangement and a draw cable, coupled to the drive motor, extends vertically upwardly (in parallel with the side edge of the curtain), over a guide pulley at the top end of the arrangement, and then horizontally along the length of the curtain arrangement (in parallel with the top edge thereof).

One or more lifting cables is/are connected at one end to the top pole of a respective curtain. The or each lifting cable extends from the top pole of a respective curtain, over a guide pulley, and then runs alongside at least a portion of the draw cable. There is a need to connect the or each lifting cable to the high tensile draw cable at one or more intervals along its length and, accordingly, curtains can then be lowered or lifted as the main draw cable is wound in/out by the drive motor at one end.

Currently, the coupling of the main draw cable and the or each lifting cable is achieved using a conventional rope grip that clamps the two cables together along the length of the arrangement. However, due to both the hanging weight of the curtain and also the wind loading acting on the curtain, the force acting on the or each lifting cable can be excessive, and, with the loads acting on the lifting cable, issues can occur with the rope grips slipping on the man draw cable, which may result in the curtain hanging unevenly.

This is a particular issue if smooth single core high tensile stainless steel cable is used, rather than the more conventional multistrand wire rope.

It is therefore an object of aspects of the invention to address at least one or more of these issues.

### Statements of Invention

In accordance with an aspect of the invention, there is provided a grip mechanism for clamping first and second cables together, said grip mechanism comprising an elongate body having a longitudinal groove extending therethrough and the grip mechanism further comprising:
- a pair of first fixing means located in a wall of said body, and extending therethrough to said longitudinal groove, each of said first fixing means being located in spaced apart relation along the length of said body; and
- a second fixing means located in a wall of said body, substantially diametrically opposite said wall in which said first fixing means are provided, and extending therethrough to said longitudinal groove, said second fixing means being located along the length of said body, between the locations of said pair of first fixing means.

Beneficially, the grip mechanism may further comprise a slit or channel extending along and through the wall of said body, said slit or channel being communicably coupled to said longitudinal groove, In an embodiment, the body may be generally cylindrical and, optionally, may have a substantially G-shaped lateral cross-section.

In an embodiment, each of said first pair of fixing means may comprise a screw threaded hole extending through the wall of said body to said longitudinal groove, and a screw configured to be inserted into and through said screw threaded hole. The screw may, optionally, comprise a grub screw.

In an embodiment, said second fixing means may comprise a screw threaded hole extending through the wall of said body to said longitudinal groove, and a screw configured to be inserted into and through said screw threaded hole. The screw may, optionally, comprise a grub screw.

In an embodiment, said second fixing means may be located substantially centrally relative to the longitudinal locations of said first fixing means.

Optionally, each of said first fixing means is located close to a respective end of said body.

In an embodiment, the body may be formed of aluminium, mild steel or stainless steel.

In an embodiment, the grip mechanism may be configured to grip together a draw cable and a lifting cable of a rolling curtain assembly.

According to another aspect of the present invention, there is provided a rolling curtain assembly comprising a draw cable communicably coupled to a drive motor and extending along a width of said assembly, and at least one lifting cable connected at one end to a curtain of said rolling curtain assembly and extending along at least a portion of the width of said curtain assembly, adjacent to said raw cable, said rolling curtain assembly further comprising at least one grip mechanism substantially as described above configured to grip together said draw cable and said lifting cable with said lifting cable sitting in said longitudinal groove and said draw cable above it.

These and other aspects of the invention will be apparent from the following detailed description.

### Brief Description of the Drawings

Embodiments of the present invention will now be described by way of examples only, and with reference to the accompanying drawings, in which:
Figure 1 is a schematic illustration of a rolling curtain assembly;
Figure 2 is a schematic diagram illustrating some of the internal components of a rolling curtain assembly;
Figure 3 is a schematic diagram illustrating a draw cable and lifting cable assembly for use in a rolling curtain assembly;
Figure 3A is a diagram illustrating a conventional rope grip;
Figure 4 is a schematic perspective view of the body of a grip mechanism according to an exemplary embodiment of the present invention;
Figure 5 is a schematic plan view of the body of a grip mechanism according to an exemplary embodiment of the present invention;
Figure 6 is a schematic perspective view of a grip mechanism according to an exemplary embodiment of the present invention;
Figure 6A is a schematic exploded view of the grip mechanism of Figure 6;
Figure 7 is a schematic end view of a grip mechanism according to an exemplary embodiment of the invention, when in use; and
Figure 7A is a schematic side view of the grip mechanism of Figure 6.

### Detailed Description

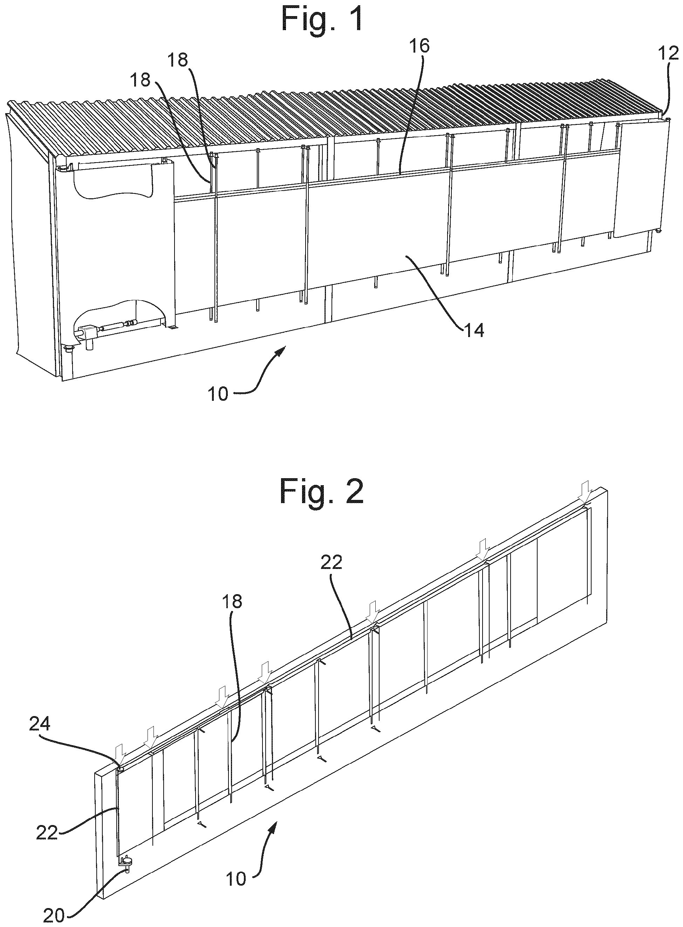

Referring to Figure 1 of the drawings, there is illustrated schematically, a rolling curtain assembly 10 for use in regulating ventilation openings on the side of an agricultural building 12, to optimise the internal environment for the livestock housed therein. In the assembly 10, a curtain 14, formed of a supple material, is mounted on a pole 16 that runs all the way along its top edge. Pairs of parallel vertical bars 18 are located in spaced apart relation along the lateral width of the curtain assembly 10, the curtain(s) extending between each pair of parallel bars 18.

Referring to Figure 2 of the drawings, a drive motor 20 may be located at one end of the assembly 10, toward the bottom edge thereof, and a draw cable 22 extends from the drive motor 20, vertically upward along one side edge of the assembly 10, over a primary pulley (24 - Figure 2) and then horizontally along the width of the assembly 10, close to its top edge.

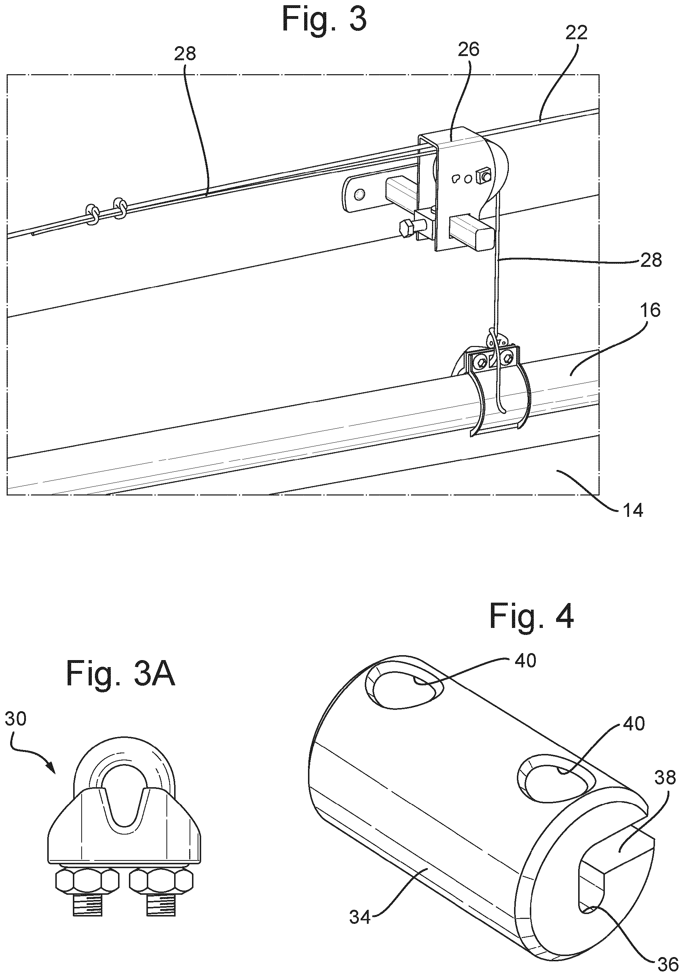

Referring to Figure 3 of the drawings, at at least one location along the width of the assembly (10 - Figures 1, 2), there is provided a secondary pulley mechanism 26. The draw cable 22 extends over the roller of, and through, the secondary pulley mechanism 26. A lifting cable 28 is affixed at one end thereof to the pole 16 of a curtain 14 and extends from there, vertically upward, over the roller of the secondary pulley mechanism 26 and along at least a portion of the width of the assembly (10 - Figures 1, 2), adjacent to the draw cable 22. Any suitable means, such as a conventional rope grip (30 - Figure 3A) may be utilized to affix the end of the lifting cable 28 to the curtain pole 16.

In order to communicably couple the draw cable 22 to the or each lifting cable 28, it is necessary for the two cables 22, 28 to be clamped together and traditional means, such as the conventional rope grip (30 - Figure 3A) have been used for this purpose in prior art arrangements. However, with the high loads that can act on the lifting cable 28, especially when it is windy, issues can occur with the conventional rope grips slipping on the main draw cable 22, which can result in the curtain hanging unevenly.

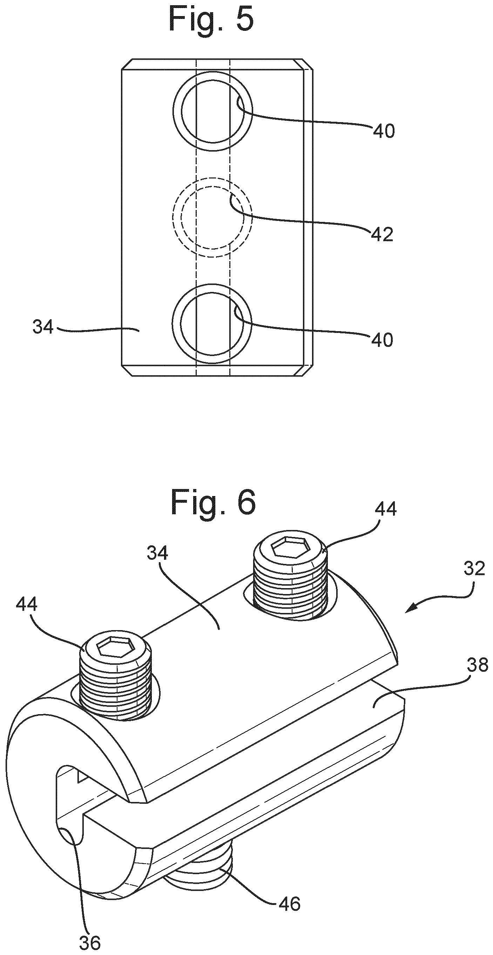

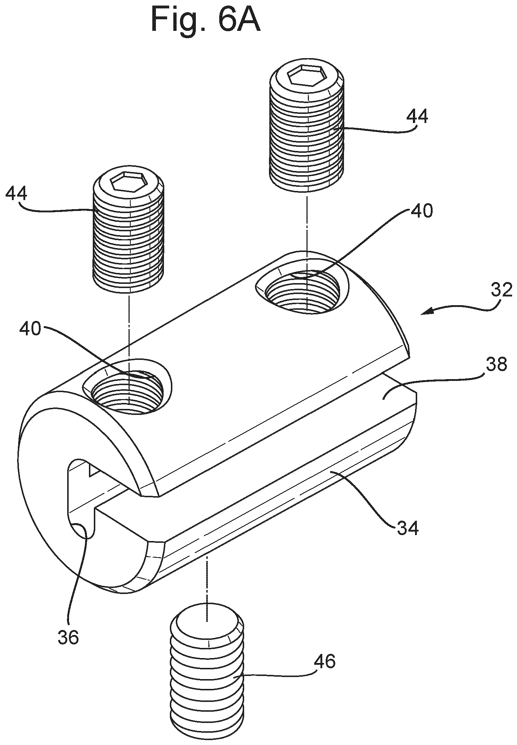

Referring now to Figures 4, 5 and 6 of the drawings, an example grip mechanism 32 intended to address this issue is illustrated schematically. The example grip mechanism 32 comprises an elongate body 34 having a generally cylindrical external profile and of generally G-shaped cross-section, having a generally central longitudinal groove 36 running through it, and a longitudinal slit 38 running along its length (adjacent to the external circumferential edge of the body 34), the slit 38 being communicably coupled with the inner longitudinal groove 36. First and second fixing points 40 are provided in the circumferential wall of the body 34, above the longitudinal groove 36 (when the device is oriented for use, as shown in Figures 4 and 5 of the drawings), each fixing point being located close to a respective longitudinal end of the body 34. A third fixing point 42 is provided in the circumferential wall of the body 34, diametrically opposite to that in which the first and second fixing points 40 are provided. In this case, the third fixing point 42 is provided along the length of the body 34, substantially centrally between the first and second fixing points. In this example embodiment, the first and second fixing points 40 comprise first and second screw threaded holes 40, each shaped and configured to receive, in use, a respective grub screw 44. Similarly, in this example embodiment, the third fixing point comprises a screw threaded hole 42, shaped and configured to receive a respective grub screw 46.

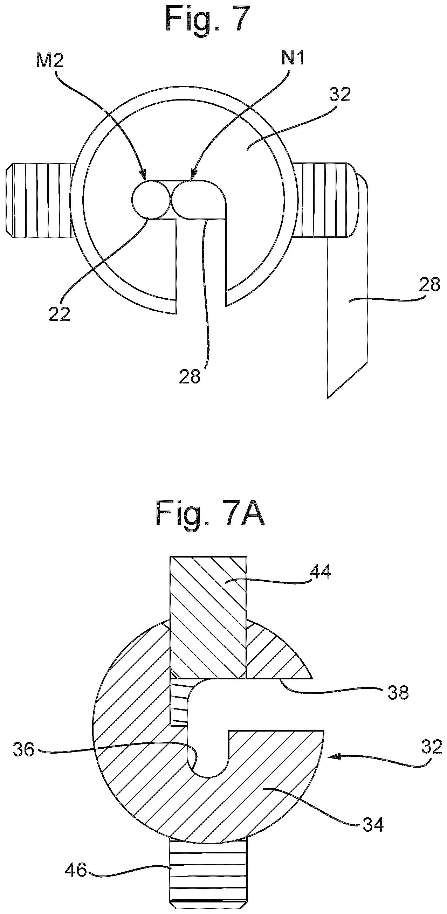

In use, and referring now to Figures 7 and 7A of the drawings, the grip mechanism 32 can be slipped over the high tension lifting cable 28, via the slit 38, such that the lifting cable 28 sits in the longitudinal groove 36, with the adjacent portion of the draw cable 22 (wire rope) above, gripping the lifting cable 28. The grub screws 44, 46 are inserted into their respective holes 40, 42 and tightened to secure the grip in place. The grub screws 44, 46 are positioned, when tightened so that the internal ends thereof are substantially flush with the edges of the longitudinal groove 36, to create a slight deflection in the lifting cable 28, although care must be taken not to over-tighten the screws 44, 46, which could damage the lifting cable 28. In a specific example embodiment, the two "top' grub screws 44 may be tightened to 6.5N and the 'bottom' grub screw 46 may be tightened to 3.5N, both using, for example, s 3mm Allen key with torque wrench. However, the present invention is not necessarily intended to be limited in this regard.

It will be appreciated by a person skilled in the art, from the foregoing description, that modifications and variations can be made to the described embodiment, without departing from the scope of the invention as defined by the appended claims. For example, the external profile of the body 34 of the grip mechanism 32 need not necessarily be cylindrical but could, in fact, be of any shape, for example square/rectangular, oval, etc. Furthermore, the fixing points need not necessarily comprise screw threaded holes and grub screws, and alternative means for clamping the draw cable 22 and lifting cable 28 together within the grip mechanism such that a slight deflection of the lifting cable 28 is achieved may be apparent to a person skilled in the art. Still further, the second fixing point need not necessarily be exactly central relative to the locations of the first fixing points and, in some embodiments, the second fixing point could be off-centre with regard to the locations of said first fixing points. In some embodiments, the longitudinal slit may be omitted, which would mean that the draw and lifting cables would have to be threaded through the longitudinal groove from their free ends, but the grip mechanism would otherwise operate in much the same way a described above.

## Claims

1. A grip mechanism for clamping first and second cables together, said grip mechanism comprising an elongate body having a longitudinal groove extending therethrough, the grip mechanism further comprising:
- a pair of first fixing means located in a wall of said body, and extending therethrough to said longitudinal groove, each of said first fixing means being located in spaced apart relation along the length of said body; and
- a second fixing means located in a wall of said body, substantially diametrically opposite said wall in which said first fixing means are provided, and extending therethrough to said longitudinal groove, said second fixing means being located along the length of said body, between the locations of said pair of first fixing means;
the grip mechanism further comprising a slit or channel extending along and through the wall of said body, said slit or channel being communicably coupled to said longitudinal groove.

2. A grip mechanism according to claim 1, wherein said body is generally cylindrical.

3. A grip mechanism according to claim 2, wherein said body has a substantially G-shaped lateral cross-section.

4. A grip mechanism according to any of the preceding claims, wherein said each of said first pair of fixing means comprises a screw threaded hole extending through the wall of said body to said longitudinal groove, and a screw configured to be inserted into and through said screw threaded hole.

5. A grip mechanism according to claim 4, wherein each said screw comprises a grub screw.

6. A grip mechanism according to any of the preceding claims, wherein said second fixing means comprises a screw threaded hole extending through the wall of said body to said longitudinal groove, and a screw configured to be inserted into and through said screw threaded hole.

7. A grip mechanism according to claim 6, wherein said screw comprises a grub screw.

8. A grip mechanism according any of the preceding claims, wherein said second fixing means is located substantially centrally relative to the longitudinal locations of said first fixing means.

9. A grip mechanism according to any of the preceding claims, wherein each of said first fixing means is located close to a respective end of said body.

10. A grip mechanism according to any of the preceding claims, wherein said body is formed of aluminium, mild steel or stainless steel.

11. A grip mechanism according to any of the preceding claims, configured to grip together a draw cable and a lifting cable of a rolling curtain assembly.

12. A rolling curtain assembly comprising a draw cable communicably coupled to a drive motor and extending along a width of said assembly, and at least one lifting cable connected at one end to a curtain of said rolling curtain assembly and extending along at least a portion of the width of said curtain assembly, adjacent to said draw cable, said rolling curtain assembly further comprising at least one grip mechanism according to any of the preceding claims configured to grip together said draw cable and said lifting cable with said lifting cable sitting in said longitudinal groove and said draw cable above it.
